(19) Europäisches Patentamt
European Patent Office
Office européen des brevets

(11) **EP 2 330 917 B1**

(12) **EUROPEAN PATENT SPECIFICATION**

(45) Date of publication and mention
of the grant of the patent:
**09.11.2016 Bulletin 2016/45**

(21) Application number: **09788074.4**

(22) Date of filing: **11.09.2009**

(51) Int Cl.:
*A23L 29/10* (2016.01)

(86) International application number:
**PCT/JP2009/066328**

(87) International publication number:
**WO 2010/030047 (18.03.2010 Gazette 2010/11)**

(54) **FAT OR OIL COMPOSITON**

FETT- ODER ÖLZUSAMMENSETZUNG

COMPOSITION GRAISSEUSE OU HUILEUSE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **12.09.2008  JP 2008234275**

(43) Date of publication of application:
**15.06.2011  Bulletin 2011/24**

(73) Proprietor: **Kao Corporation**
**Chuo-ku**
**Tokyo 103-8210 (JP)**

(72) Inventors:
• **FUJII, Atsunobu**
**Tokyo 131-8501 (JP)**

• **KATSUTA, Izumi**
**Tokyo 131-8501 (JP)**
• **SHIMIZU, Masao**
**Tokyo 131-8501 (JP)**

(74) Representative: **Hoffmann Eitle**
**Patent- und Rechtsanwälte PartmbB**
**Arabellastraße 30**
**81925 München (DE)**

(56) References cited:
**JP-A- 7 016 052       JP-A- 8 298 928**
**US-A1- 2003 099 754     US-B2- 7 141 265**

**Description**

Field of the Invention

The present invention relates to a fat or oil composition, which is suitable for food, more suitable for cooking, even more suitable for deep-fried foods such as fried foods and tempura.

Background of the Invention

Conventionally, a large number of liquid fats or oils, such as corn oil, rapeseed oil, soybean oil, cottonseed oil, rice oil, safflower oil, sunflower oil, high-oleic safflower oil, high-oleic sunflower oil, sesame oil and olive oil, have been used for the cooking of tempura or fried food. The liquid fat or oil means a fat or oil that stays liquid at 20°C, when determined according to a "Cold Test (2.2.8-2) described in "Standard methods for the Analysis of Fats, Oils and Related Materials" edited by Japan Oil Chemists' Society.

However, when tempura is fried using a fat or oil, the dispersibility of the tempura batter (dispersion degree of the batter in a frying oil) is not good in some cases. If the dispersibility of the tempura batter is not good, the exchange between oil and water does not well work when a deep-fried food is cooked, so that crunchy texture or crispy texture peculiar to tempura is not obtained in some cases.

To solve the foregoing problems, there are techniques that are known to improve the dispersibility of the tempura batter upon cooking by blending various emulsifying agents for food with fats or oils (see Patent Documents 1 to 8). There is also another known technique directed to the same improvement, which is characterized by blending an emulsifying agent in a fat or oil to decrease the interfacial tension between a fat or oil and water (see Patent Document 9).

[Patent Document 1] JP-A-05-316950
[Patent Document 2] JP-A-05-316951
[Patent Document 3] JP-A-07-000109
[Patent Document 4] JP-A-07-75499
[Patent Document 5] JP-A-07-147902
[Patent Document 6] JP-A-06-153794
[Patent Document 7] JP-A-07-16051
[Patent Document 8] JP-A-07-16053
[Patent Document 9] JP-A-07-16052
[Patent Document 10] US 7 141 265 B2:

A composition is disclosed which includes an oil/fat blend and sucrose stearate ester. The oil/fat composition contains 85% of diglyceride, and the amount of diglyceride in the spray-dried composition is about 50%. Said sucrose stearate ester has a mono ester content of 75%. Furthermore, stearic acid is saturated, so that the concentration of saturated fatty acids as the fatty acids constituting the ester in the sucrose fatty acid ester is 100%.

Disclosure of the Invention

The present invention provides a fat or oil composition comprising diacylglycerol and a sucrose fatty acid ester, wherein the content of diacylglycerol in the fat or oil composition is 20 wt.% or more;
wherein the content of monoester in the sucrose fatty acid ester is 30 wt% or more; and
wherein the concentration of saturated fatty acids as the fatty acids constituting the ester in the sucrose fatty acid ester is from 0 to 30 wt.%, the residual constituent fatty acids being unsaturated fatty acids.

Detailed Description of the Invention

The inventors of the present invention have studied fat or oil compositions containing various emulsifying agents for food, in terms of its property serving as fats or oils for deep-fried foods such as tempura and fried foods. This study has found that while the above-mentioned conventional techniques where an emulsifying agent is added to a fat or oil show an improvement effect to a certain extent, there are limitations to the amount of the emulsifying agent blended because of solubility of the emulsifying agent in the fat or oil, and the properties of the deep-fried food such as texture are affected by the amount. Furthermore, the inventors have found that if an emulsifying agent is blended to further improve the properties in an amount near the upper limit of the solubility of the emulsifying agent in the fat or oil, the appearance of the fat or oil may be deteriorated because the emulsifying agent is crystallized under certain storage conditions.

Thus the present invention relates to providing a fat or oil composition as a fat or oil for cooking a deep-fried food, which can improve properties of the batter of the deep-fried food, such as dispersibility, flavor and texture.

The inventors have made extensive studies to produce a fat or oil which has such preferable properties as mentioned above and is suitable for cooking, and more suitable for deep-fried foods. As a result, the inventors have discovered that the properties can be improved by increasing the diacylglycerol content in a fat or oil composition used as a base. Also, the inventors have discovered that a fat or oil composition which can effectively solve the above-mentioned problems can be obtained by combining a sucrose fatty acid ester containing a high concentration of a monoester, which has been conventionally recognized as an unfavorable substance and was insoluble in a general fat or oil, with a fat or oil containing a high concentration of diacylglycerol.

If the fat or oil composition of the present invention is used to perform cooking, in particular, cooking of a deep-fried food, it is possible to make a delicious deep-fried food that is coated with batter having good dispersibility and has improved flavor and texture.

Sucrose fatty acid esters according to the present invention contain 30 wt% (hereinafter, simply referred to as "%") or more of sucrose fatty acid monoester (hereinafter, referred to as "SME"). The monoester content in the sucrose fatty acid esters is preferably 40 to 90%, and more preferably 50 to 75%, in that the amount of the sucrose fatty acid esters added is allowed to be relatively small, as well as in terms of dispersibility, flavor, and texture of batter of a deep-fried food. Meanwhile, the weight ratio of sucrose fatty acid monoester to sucrose fatty acid diester (hereinafter, referred to as "SDE") (SME/SDE) is preferably 0.5 or more, more preferably 1 to 10, and even more preferably 1.2 to 5, in terms of dispersibility, flavor, and texture of batter of a deep-fried food.

Further, the average esterification degree of the sucrose fatty acid esters is preferably 1 to 2.5, more preferably 1.1 to 2, and even more preferably 1.2 to 1.7, in terms of dispersibility, flavor and texture of batter of a deep-fried food. Here, the esterification degree of the sucrose fatty acid esters is the number of fatty acid-esterified hydroxyl group (s) of 8 hydroxyl groups in one sucrose molecule. For example, the esterification degree of SME is 1, while the esterification degree of SDE is 2. In addition, the average esterification degree is a value defined by the following expression (1):
[Expression 1]

$$\bar{i} = \sum_{i=1}^{8} (i \times Wi \ / \ 100) \qquad (1)$$

where $\bar{i}$ represents an average esterification degree, i represents an esterification degree of a sucrose fatty acid ester and Wi represents a % of a sucrose fatty acid ester with an esterification degree of i in all the sucrose fatty acid esters.

The sucrose fatty acid esters according to the present invention may contain not only SME and SDE but also sucrose fatty acid triester (hereinafter, referred to as "STE") and other sucrose fatty acid polyesters (hereinafter, referred to as "SPEs"), each of which has an esterification degree of 3 or more.

In the present invention, the sucrose fatty acid ester content in the fat or oil composition is preferably 0.01 to 5%, more preferably 0.02 to 1% and even more preferably 0.03 to 0.4% in terms of dispersibility, flavor and texture of batter of a deep-fried food, and solubility. In addition, the content of SME of sucrose fatty acid esters in a fat or oil composition is preferably 0.005 to 3.75%, more preferably 0.01 to 0.75% and even more preferably 0.015 to 0.3% in terms of dispersibility, flavor, and texture of batter of a deep-fried food, and solubility.

The concentration of saturated fatty acids as the fatty acids constituting the esters in the sucrose fatty acid esters according to the present invention is 0 to 30%, preferably 3 to 30% and more preferably 5 to 20%, from the viewpoints of storage stability at a low temperature (0 to 5°C), good solubility in a fat or oil, suppression of deterioration smell caused by heating and splashed oil during cooking of a deep-fried food, dispersibility of batter of a deep-fried food, and the like. Note that, in this case, the residual constituent fatty acids are obviously unsaturated fatty acids, which are preferably oleic acid, linoleic acid or linolenic acid having 18 carbon atoms. In addition, the constituent fatty acids of the sucrose fatty acid esters preferably have 14 or more carbon atoms, from the viewpoint of reduction of deterioration smell or strange odor caused by heating. The saturated fatty acids more preferably contain palmitic acid having 16 carbon atoms, stearic acid having 18 carbon atoms, or a mixture thereof as a major component.

The sucrose fatty acid esters according to the present invention can be prepared by a known synthesis method. In general, a method of producing a sucrose fatty acid ester by a transesterification reaction using sucrose and a fatty acid lower alcohol ester such as fatty acid methyl ester is employed. Examples of the method further include: a method involving dissolving sucrose and fatty acid methyl ester or the like in a compatible solvent (such as dimethylformamide) and allowing the mixture to react with heating under reduced pressure using an alkaline catalyst such as potassium carbonate; and a method involving heating sucrose and fatty acid methyl ester together with water and a large amount of an emulsifying agent to produce a microemulsion, dehydrating the microemulsion under reduced pressure, and allowing the resultant product to react using an alkali catalyst such as potassium carbonate (Sugar Ester Story, Dai-ichi Kogyo Seiyaku Co. , Ltd.). In addition, a method involving directly heating sucrose and a fat or oil using an alkali catalyst such as potassium carbonate to perform a transesterification reaction may be employed. The sucrose fatty acid esters contained in the fat or oil composition of the present invention can be prepared by: removing excessive amounts of sucrose and solvent from the resultant reaction product; performing fractionation by a silica gel column using chloroform-methanol as a developing solvent; and reconstituting each of the resultant fractions to achieve a desired composition. Note that the sucrose fatty acid esters can also be obtained by: performing fractionation with the above-mentioned method from a commercially-available product of sucrose fatty acid esters; and reconstituting each of the resultant fractions to be suitable for the present invention. In addition, there may be used a product obtained by: dissolving a commercially-available product of sucrose fatty acid esters in hexane; adding ethanol and water thereto; adjusting the ratio of the amounts of ethanol and water to extract components of di- or higher esters of the sucrose fatty acid esters in the hexane phase; and separating the phase other than the hexane phase.

Further, as an aspect of the present invention, an emulsifying agent other than sucrose fatty acid ester may be added. Examples thereof include sorbitol fatty acid ester, sorbitan fatty acid ester, polyglycerol fatty acid ester, alkyl glucoside, erythritol fatty acid ester, and polyoxyethylene sorbitan fatty acid ester.

The fat or oil composition of the present invention contains 20% or more of diacylglycerol. The diacylglycerol content in the fat or oil composition is preferably 20 to 99.99%, more preferably 40 to 95%, and even more preferably 50 to 93% in terms of solubility of sucrose fatty acid esters, dispersibility, flavor and texture of batter of a deep-fried food, and industrial productivity of the fat or oil composition. The fat or oil composition of the present invention is preferably manufactured by incorporating a sucrose fatty acid ester into a fat or oil containing diacylglycerol at a high concentration, or a fat or oil obtained by blending a general fat or oil for food as required in the above-mentioned fat or oil (hereinafter, simply referred to as "fat or oil"), which serves as a base. The fat or oil may contain not only diacylglycerol but also monoacylglycerol and/or triacylglycerol.

Further, in the fat or oil composition of the present invention, the relationship between the diacylglycerol content and the SME content preferably satisfies the following expression (2) in terms of dispersibility, flavor and texture of batter of a deep-fried food, solubility of sucrose fatty acid esters, and appearance of the fat or oil composition. Note that the term "appearance" as used herein refers to a property judged in terms of whether crystals of sucrose fatty acid esters are generated or not in storing a fat or oil composition under a certain condition.

$$y \leq 34x - 340 \quad (2)$$

where x represents the diacylglycerol content [%] in a fat or oil composition, and y represents the SME content [ppm] in the fat or oil composition, provided that $x \geq 20$ and $y > 0$ are met.

Moreover, the value of y preferably satisfies $y \leq 34x - 680$, and more preferably satisfies $y \leq 34x - 1020$ in terms of dispersibility, flavor, and texture of batter of a deep-fried food, solubility of sucrose fatty acid esters, and appearance of the fat or oil composition.

In an aspect of the present invention, in the case where the fat or oil contains monoacylglycerol, the content of monoacylglycerol in the fat or oil is preferably 0.1 to 5%, more preferably 0.1 to 2%, and even more preferably 0.2 to 1% in terms of flavor, appearance, smoke generation, industrial productivity of the fat or oil, and the like.

In an aspect of the present invention, in the case where the fat or oil contains triacylglycerol, the content of triacylglycerol in the fat or oil is desirably 4.9 to 79.9%, more desirably 9.9 to 59.9%, and even more desirably 9.9 to 39.9% in terms of physiological effect, industrial productivity of the fat or oil, and appearance.

In addition, constituent fatty acids in the fat or oil preferably have 8 to 24 carbon atoms. The unsaturated fatty acid content in all the constituent fatty acids is preferably 80 to 100%, more preferably 90 to 100%, and even more preferably 93 to 98% in terms of physiological effect and appearance. The diacylglycerol is preferably di-unsaturated-acylglycerolin terms of physiological effect and appearance.

In the present invention, the fat or oil can be obtained by mixing a fat or oil containing diacylglycerol at a high concentration obtained by a transesterification reaction of a mixture of glycerin and one kind or two or more kinds of fats or oils selected from fats or oils containing unsaturated fatty acid residues at a high concentration, such as safflower oil, olive oil, cottonseed oil, corn oil, rapeseed oil, soybean oil, palm oil, sunflower oil, sesame oil, lard, beef tallow, fish oil, milk fat, or fractionated oils thereof, oils obtained by randomizing fatty acids, hardened oils and transesterified oils in the presence of a hydroxide of an alkali metal or an alkali earth metal or a lipid-degrading enzyme such as a lipase, or by an esterification reaction of glycerin and a fatty acid obtained by hydrolyzing any of the above-mentioned fats or oils, singly or with any of the above-mentioned raw material fats or oils. An excessive amount of monoacylglycerol produced by the reaction can be removed by molecular distillation or chromatography. Although the reactions may also be performed by a chemical reaction using an alkali catalyst or the like, the reactions are preferably performed using an enzyme such as 1,3-position selective lipase under calm conditions in terms of excellence in flavor and the like. Examples of another method of increasing the diacylglycerol content in a glyceride mixture include use of a fractionated oil of a natural fat or oil for food. Note that some of the fats or oils contain diacylglycerol as a natural component, and in the present invention, the diacylglycerol content in the fat or oil composition which includes the diacylglycerol content as a natural component is adjusted to 20% or more.

An antioxidant is preferably added to the fat or oil composition of the present invention. The antioxidant is not particularly limited as long as the antioxidant is usually used for foods. The antioxidant is preferably one or more of the members selected from the group consisting of natural antioxidants, tocopherol, catechin, phospholipids, ascorbic acid fatty acid ester, BHT, BHA, and TBHQ. Of those, the antioxidant is more preferably one or more of the members selected from the group consisting of natural antioxidants, tocopherol, and ascorbyl palmitate.

The fat or oil composition of the present invention is used preferably for food, more preferably for cooking, and even more preferably for cooking of deep-fried foods such as fried food and tempura in terms of dispersibility, flavor, and texture of batter of a cooked food, appearance at room temperature, and the like.

Examples

[Preparation of sucrose fatty acid ester]

A commercially-available product of a sucrose fatty acid ester (Mitsubishi-Kagaku Foods Corporation, O-1570) was used as sample A. Meanwhile, the sample A and another commercially-available product of a sucrose fatty acid ester (Mitsubishi-Kagaku Foods Corporation, O-170) were separately fractionated by a silica gel column using chloroform-methanol as a developing solvent, and the resultant fractions were mixed again to prepare sucrose fatty acid esters having different compositions and average esterification degrees, whereby samples B to E were obtained. The compositions, esterification degrees and the like of the resultant sucrose fatty acid esters (hereinafter, also referred to as "SE") are shown in Table 1.

[Table 1]

| Sample name | Composition in sucrose fatty acid ester (%) | | | | Average esterification degree | SME/SDE |
|---|---|---|---|---|---|---|
| | SME | SDE | STE | SPE | | |
| A | 67.8 | 25.5 | 6.7 | 0.0 | 1.4 | 2.67 |
| B | 50.0 | 36.2 | 11.2 | 2.6 | 1.7 | 1.38 |
| C | 43.6 | 38.5 | 14.5 | 3.4 | 1.8 | 1.13 |
| D | 30.0 | 39.1 | 22.7 | 8.2 | 2.1 | 0.77 |
| E | 0.3 | 39.6 | 39.9 | 20.2 | 3.2 | 0.01 |

[Method of manufacturing fat or oil containing high concentration of diacylglycerol]

A fat or oil containing a high concentration of diacylglycerol (hereinafter, also referred to as "DAG") was manufactured by the following steps. 455 parts by weight of soybean fatty acid, which had been winterized to reduce saturated fatty acids, 195 parts by weight of rapeseed fatty acid, and 107 parts by weight of glycerin were subjected to an esterification reaction for 5 hours using a commercially-available lipase preparation (product name: "Lipozyme RM IM", Novo Industri A.S.), which is an immobilized 1,3-position selective lipase, as a catalyst under conditions of 0.07 hPa and 40°C. Subsequently, after removal of the lipase preparation by filtration, the resultant was subjected to molecular distillation at 235 °C. The resultant product was washed with water and deodorized at 235°C for 1 hour, to thereby manufacture a DAG-containing fat or oil. Table 2 shows analysis values.

Note that, in the following table, TAG refers to triacylglycerol and MAG refers to monoacylglycerol (same hereinafter).

[Table 2]

| | Composition of fat or oil containing high concentration of DAG | % |
|---|---|---|
| Glyceride composition | TAG | 8.0 |
| | DAG | 91.3 |
| | MAG | 0.6 |
| | Free fatty acid | 0.1 |
| Fatty acid composition | C16:0 | 3.0 |
| | C18:0 | 1.0 |
| | C18:1($\omega$9) | 37.5 |
| | C18:2($\omega$6) | 49.3 |
| | C18:3($\omega$3) | 8.4 |
| | C20:0 | 0.3 |
| | C20:1 | 0.5 |

[Preparation of fat or oil composition]

The above-mentioned fat or oil containing a high concentration of DAG, a commercially-available salad oil (The Nisshin OilliO Group, Ltd. , Nisshin salad oil), and SE samples A to E were blended at weight ratios shown in Table 3, to thereby prepare fat or oil compositions (Examples 1 to 13 and Comparative Examples 14 to 18). Note that the glyceride composition of the commercially-available salad oil is as follows: TAG: 94.9%, DAG: 5.1%, MAG: 0.0%.

[Table 3]

| | | Example | | | | | | | | | | | | | Comparative Example | | | | |
|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 |
| Fat or oil containing high concentration of DAG | | 17.30 | 40.51 | 40.51 | 52.11 | 52.12 | 63.71 | 75.32 | 75.33 | 99.95 | 99.75 | 99.66 | 99.61 | 99.43 | 0.00 | 0.00 | 0.00 | 40.52 | 99.8 |
| Nisshin salad oil (The Nisshin OilliO Group, Ltd.) | | 82.65 | 59.44 | 59.39 | 47.79 | 47.73 | 36.24 | 24.48 | 24.42 | 0.00 | 0.00 | 0.00 | 0.00 | 0.00 | 99.95 | 99.95 | 99.80 | 59.28 | 0.0 |
| DAG content (%) | | 20 | 40 | 40 | 50 | 50 | 60 | 70 | 70 | 91 | 91 | 90 | 91 | 91 | 5 | 5 | 5 | 40 | 91 |
| SE sample name | | A | A | A | A | A | A | A | A | A | A | B | C | D | A | D | E | E | E |
| SE content in fat or oil composition (%) | | 0.05 | 0.05 | 0.10 | 0.10 | 0.15 | 0.05 | 0.20 | 0.25 | 0.05 | 0.25 | 0.34 | 0.39 | 0.57 | 0.05 | 0.05 | 0.20 | 0.20 | 0.20 |
| SME content in fat or oil composition (ppm) | | 340 | 340 | 680 | 680 | 1,020 | 340 | 1,360 | 1,700 | 340 | 1,700 | 1,700 | 1,700 | 1,700 | 340 | 340 | 6 | 6 | 6 |
| Evaluation | Solubility | a | a | b | a | b | a | a | b | a | a | a | a | a | c | c | a | a | a |
| | Storage stability | 3 | 5 | 3 | 4 | 3 | 5 | 4 | 3 | 5 | 5 | 5 | 5 | 5 | 1 | 1 | 5 | 5 | 5 |
| | Dispersibility | 5 | 5 | 5 | 5 | 5 | 5 | 5 | 4 | 5 | 5 | 4 | 5 | 4 | — | — | 5 | 4 | 3 |
| | Oil odor | 4 | 5 | 5 | 5 | 5 | 5 | 4 | 5 | 5 | 5 | 4 | 4 | 4 | — | — | 3 | 4 | 3 |
| | Lightness | 3 | 4 | 4 | 4 | 5 | 4 | 4 | 4 | 5 | 4 | 4 | 3 | 3 | — | — | 3 | 3 | 3 |
| | Flavor | 3 | 4 | 4 | 4 | 4 | 4 | 4 | 4 | 5 | 4 | 4 | 4 | 3 | — | — | 2 | 3 | 3 |
| | Texture | 3 | 4 | 4 | 4 | 5 | 4 | 4 | 4 | 5 | 5 | 4 | 4 | 3 | — | — | 3 | 3 | 3 |

EP 2 330 917 B1

[Evaluation of solubility at high temperature]

Of the above-mentioned fat or oil compositions, the compositions of Examples 1 to 13 and Comparative Examples 14 to 18 were stirred at 120°C for 1 hour and evaluated whether the compositions contain SE insoluble matters or not based on the following criteria. Table 3 shows the results.

a: A clear fat or oil composition where SEs are completely dissolved.
b: A turbid fat or oil composition where most of SEs are dissolved but fine crystals are dispersed.
c: A fat or oil composition where SEs are not dissolved and present.

[Evaluation of storage stability at room temperature]

Each of the fat or oil compositions used in the above-mentioned evaluation of the solubility at a high temperature was left to stand at 25°C for 1 day, and the appearances were evaluated based on the following criteria. Table 3 shows the results.

5:  Completely clear and not turbid
4:  Clear but slightly turbid
3:  Turbid in whole
2:  Very turbid and white-colored
1:  Crystals are precipitated in part

As is clear from the results shown in Table 3, in the fats or oils containing 20% or more of diacylglycerol, the sucrose fatty acid esters containing a monoester at a high concentration can be dissolved, and the fats or oils were found to have high storage stability. On the other hand, in the fats or oils containing diacylglycerol at a low concentration, the sucrose fatty acid esters containing the monoester at a high concentration was found to be difficult to dissolve, and the fats or oils were found to have low storage stability.

[Evaluation of cooking of deep-fried food]

Of the above-mentioned fat or oil compositions, the fat or oil compositions of Examples 1 to 13 and Comparative Examples 16 to 18 were used to perform sensory evaluation based on the following criteria on the dispersibility of batter when a deep-fried food (tempura) was made, oil odor, lightness, flavor, and texture of the deep-fried food.

[Preparation of batter for tempura]

One egg and 150 g of water were mixed, and 100 g of soft wheat flour was mixed briefly therein while the mixture was cooled at 0°C, to thereby prepare batter for tempura.

[Evaluation of dispersibility of batter]

500 g of each fat or oil composition was placed in an iron pan for frying (diameter 15 cm, height 8 cm), followed by heating up to 180 °C. 5 g of batter for tempura previously prepared was added to the fat or oil composition and taken out 1 minute later, and the batter of tempura was fried. An image analysis of the picture of the resultant batter was performed, and the dispersibility of the batter was evaluated based on the area ratio to the circumference. That is, as shown in the following expression, in the case where the shape becomes circular, the value becomes closer to 1. As the dispersion proceeds, the value becomes larger. "Deformation degree" is defined by the following expression (3), and evaluation was performed based on the following criteria. Table 3 shows the results.

$$\text{Deformation degree} = (\text{circumference length})^2/4\pi \times \text{area} \quad (3)$$

5: Batter having very good dispersibility (deformation degree 5 or more)
4: Batter having good dispersibility (deformation degree 4 or more and less than 5)
3 : Batter having not good dispersibility but causing no problem in practical use (deformation degree 3 or more and less than 4)
2: Batter having dispersibility in part (deformation degree 2 or more and less than 3)

1: Batter having hardly any dispersibility (deformation degree 1 or more and less than 2)

[Evaluation of oil odor, lightness, and flavor]

Evaluation of the flavor of a deep-fried food was performed by 6 specialist panels having a sensitive palate through a blind pair test for products obtained by frying macrophyll (Japanese basil leaf) coated with the above-mentioned batter for tempura at 180°C in the above-mentioned fat or oil composition or in only a salad oil. The panels evaluated the products on the oil odor (bad smell caused by heating), lightness (non-fatty texture), and flavor (taste of the material) based on the following criteria, and average values of the scores determined by the 6 specialist panels are shown as the scores of the tempura. Table 3 shows the results.

5 : The tempura fried in the fat or oil composition of the present invention is significantly good compared with that fried in the salad oil.

4 : The tempura fried in the fat or oil composition of the present invention is very good compared with that fried in the salad oil.

3 : The tempura fried in the fat or oil composition of the present invention is good compared with that fried in the salad oil.

2 : The tempura fried in the fat or oil composition of the present invention is slightly good compared with that fried in the salad oil.

1: The tempura fried in the fat or oil composition of the present invention is equal to that fried in the salad oil.

[Evaluation of texture]

Evaluation of the texture of a deep-fried food was performed by the above-mentioned 6 specialist panels for the above-mentioned macrophyll fried products based on its crispy texture according to the following criteria, and average values were recorded as scores.

Table 3 shows the results.

5: The batter obtained by using the fat or oil composition of the present invention is significantly crispier.
4: The batter obtained by using the fat or oil composition of the present invention is much crispier.
3: The batter obtained by using the fat or oil composition of the present invention is crispier.
2: The batter obtained by using the fat or oil composition of the present invention is slightly crispier.
1: The batter obtained by using the fat or oil composition of the present invention is equal to that obtained by using the salad oil.

As is clear from the results shown in Table 3, the deep-fried foods cooked by using the fat or oil compositions containing 20% or more of DAG and a sucrose fatty acid ester in which the monoester content is 30% or more were found to have excellent properties such as dispersibility, flavor, and texture.

**Claims**

1. A fat or oil composition comprising diacylglycerol and a sucrose fatty acid ester,
   wherein the content of diacylglycerol in the fat or oil composition is 20 wt.% or more;
   wherein the
   content of monoester in the sucrose fatty acid ester is 30 wt% or more; and
   wherein the concentration of saturated fatty acids as the fatty acids constituting the ester in the sucrose fatty acid ester is from 0 to 30 wt.%, the residual constituent fatty acids being unsaturated fatty acids.

2. The fat or oil composition according to claim 1, wherein a content weight ratio of sucrose fatty acid monoester (SME) to sucrose fatty acid diester (SDE) in the sucrose fatty acid ester (SME/SDE) is 0.5 or more.

3. The fat or oil composition according to claim 1 or 2, wherein an average esterification degree of the sucrose fatty acid ester which is defined by the following expression (1), satisfies 1 to 2.5:
   [Expression 1]

$$\bar{i} = \sum_{i=1}^{8} (i \times Wi / 100) \qquad (1)$$

wherein i represents an average esterification degree, i represents an esterification degree of a sucrose fatty acid ester, and Wi represents a wt% of a sucrose fatty acid ester with an esterification degree of i in all the sucrose fatty acid esters.

4. The fat or oil composition according to any one of claims 1 to 3, wherein a content of the sucrose fatty acid ester in the fat or oil composition is 0.01 to 5 wt%.

5. Use of the fat or oil composition as defined in any of the claims 1 to 4 for cooking food.

**Patentansprüche**

1. Fett- oder Ölzusammensetzung, umfassend Diacylglycerin und einen Sucrose-Fettsäureester,
   worin der Gehalt von Diacylglycerin in der Fett- oder Ölzusammensetzung 20 Gew.% oder mehr ist;
   worin der Gehalt des Monoesters im Sucrose-Fettsäureester 30 Gew.% oder mehr ist; und
   worin die Konzentration an gesättigten Fettsäuren als Fettsäuren, die den Ester im Sucrose-Fettsäureester ausmachen, von 0 bis 30 Gew.% ist, wobei die restlichen Bestandteilsfettsäuren ungesättigte Fettsäuren sind.

2. Fett- oder Ölzusammensetzung gemäß Anspruch 1, worin ein Gewichtsverhältnis des Sucrose-Fettsäuremonoesters (SME) zum Sucrose-Fettsäurediester (SDE) im Sucrose-Fettsäureester (SME/SDE) 0,5 oder mehr ist.

3. Fett oder Ölzusammensetzung gemäß Anspruch 1 oder 2, worin ein durchschnittlicher Veresterungsgrad des Sucrose-Fettsäureesters, der durch die folgende Gleichung (1) definiert ist, 1 bis 2,5 erfüllt:
   [Gleichung 1]

$$\bar{i} = \sum_{i=1}^{8} (i \times Wi / 100) \qquad (1)$$

worin $\bar{i}$ einen durchschnittlichen Veresterungsgrad bedeutet, i ein Veresterungsgrad eines Sucrose-Fettsäureesters ist und Wi ein Gew.%-Satz eines Sucrose-Fettsäureesters mit einem Veresterungsgrad von i in allen Sucrose-Fettsäureestern ist.

4. Fett- oder Ölzusammensetzung gemäß einem der Ansprüche 1 bis 3, worin ein Gehalt des Sucrose-Fettsäureesters in der Fett- oder Ölzusammensetzung 0,01 bis 5 Gew.% ist.

5. Verwendung der Fett- oder Ölzusammensetzung wie in einem der Ansprüche 1 bis 4 definiert, zum Kochen von Nahrungsmitteln.

**Revendications**

1. Composition graisseuse ou huileuse comprenant un diacylglycérol et un ester d'acide gras et de saccharose,
   dans laquelle la teneur en diacylglycérol dans la composition graisseuse ou huileuse est de 20 % en poids ou supérieure ;
   dans laquelle la teneur en monoester dans l'ester d'acide gras et de saccharose est de 30 % en poids ou supérieure ; et
   dans laquelle la concentration d'acides gras saturés en tant qu'acides gras constituant l'ester dans l'ester d'acide gras et de saccharose est de 0 à 30 % en poids, les acides gras constituants résiduels étant des acides gras insaturés.

2. Composition graisseuse ou huileuse selon la revendication 1, dans laquelle un rapport pondéral en teneur du monoester d'acide gras et de saccharose (SME) au diester d'acide gras et de saccharose (SDE) dans l'ester d'acide gras et de saccharose (SME/SDE) est de 0,5 ou supérieur.

3. Composition graisseuse ou huileuse selon la revendication 1 ou 2, dans laquelle un degré d'estérification moyen de l'ester d'acide gras et de saccharose qui est défini par l'expression (1) suivante, satisfait 1 à 2,5 :

[Expression 1]

$$\bar{i} = \sum_{i=1}^{8} (i \times W_i / 100) \qquad (1)$$

dans laquelle $\bar{i}$ représente un degré d'estérification moyen, i représente un degré d'estérification d'un ester d'acide gras et de saccharose et $W_i$ représente un % en poids d'un ester d'acide gras et de saccharose avec un degré d'estérification de i dans tous les esters d'acide gras et de saccharose.

4. Composition graisseuse ou huileuse selon l'une quelconque des revendications 1 à 3, dans laquelle une teneur en ester d'acide gras et de saccharose de la composition graisseuse ou huileuse est de 0,01 à 5 % en poids.

5. Utilisation de la composition graisseuse ou huileuse telle que définie dans l'une quelconque des revendications 1 à 4 pour la cuisson d'aliments.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5316950 A
- JP 5316951 A
- JP 7000109 A
- JP 7075499 A
- JP 7147902 A
- JP 6153794 A
- JP 7016051 A
- JP 7016053 A
- JP 7016052 A
- US 7141265 B2